# EUROPÄISCHE PATENTSCHRIFT

(11) **EP 2 331 802 B1**
(45) Veröffentlichungstag und Bekanntmachung des Hinweises auf die Patenterteilung: **04.03.2020**
(21) Anmeldenummer: 09782483.3
(22) Anmeldetag: 02.09.2009
(51) Int. Cl.: F02D 41/14, F02D 41/00, G01N 27/18

(54) **ANORDNUNG ZUR MESSUNG EINER KOHLENWASSERSTOFFKONZENTRATION UND BRENNKRAFTMASCHINE**
APPARATUS FOR MEASURING A HYDROCARBON CONCENTRATION AND INTERNAL COMBUSTION ENGINE
DISPOSITIF DE MESURE D'UNE CONCENTRATION D'HYDROCARBURES ET MOTEUR À COMBUSTION INTERNE

(30) Priorität: 02.09.2008 DE 102008045322
(43) Veröffentlichungstag der Anmeldung: 15.06.2011
(73) Patentinhaber: Vitesco Technologies GmbH, 30165 Hannover (DE)
(72) Erfinder: KNITTEL, Thorsten, 93049 Regensburg (DE); WILDGEN, Andreas, 93152 Nittendorf (DE)
(74) Vertreter: Waldmann, Georg Alexander
(86) Internationale Anmeldenummer: PCT/EP2009/061306
(87) Internationale Veröffentlichungsnummer: WO 2010/026146

(56) Entgegenhaltungen:
- EP-A- 1 094 306
- DE-A1- 4 244 224
- DE-A1- 19 509 310
- JP-A- 2000 065 783
- US-A- 5 535 614

## Beschreibung

Die Erfindung betrifft eine Anordnung zur Messung einer Kohlenwasserstoffkonzentration und eine Brennkraftmaschine, die eine solche Anordnung aufweist.

Aus dem Kraftstofftank eines Kraftfahrzeugs, in dem beispielsweise Benzin gelagert ist, können Abgase austreten, die sich aus dem Kraftstoff lösen. Leicht flüchtige Kohlenwasserstoffe können sich bei hohen Außentemperaturen oder durch Erschütterungen des Kraftstofftanks während der Fahrt aus dem Kraftstoff lösen und als Gas den Kraftstofftank verlassen. Um dem entgegenzuwirken, können Kraftstofftanks gasdicht abgeschlossen werden. Die flüchtigen Kohlenwasserstoffe werden dann in einem Speicher zwischengespeichert und können der Ansaugluft des Verbrennungsmotors zugeführt werden. Wenn nicht oder nicht ausreichend genau bekannt ist, wie viel Kohlenwasserstoffe in der Ansaugluft gelöst sind, kann nicht genau genug gesteuert werden, wie viel weniger Kraftstoff eingespritzt werden muss, um ein möglichst optimales Kraftstoff-/Luft-Verhältnis zu erreichen. Dies führt zu einem erhöhten Kraftstoffverbrauch des Verbrennungsmotors und gegebenenfalls auch zu schlechteren Abgaswerten.

Die US 5,535,614 beschreibt eine Vorrichtung zur Ermittlung eines Kraftstoffgehalts in einem Tankentlüftungssystem.

Die EP 1 094 306 A1 zeigt eine Sensoranordnung, die mehrere Temperatursensoren und ein Heizelement aufweist.

Es ist eine Aufgabe der Erfindung, eine Anordnung zur Messung einer Kohlenwasserstoffkonzentration sowie eine Brennkraftmaschine anzugeben, die einen präzisen Betrieb einer Brennkraftmaschine ermöglichen.

Diese Aufgabe wird gelöst durch eine Anordnung mit dem Merkmal des Anspruchs 1 beziehungsweise einer Brennkraftmaschine mit den Merkmalen des Anspruchs 9.

Eine Anordnung zur Messung einer Kohlenwasserstoffkonzentration eines Gasstroms in einer Leitung umfasst mindestens einen Sensor zur Messung einer Kohlenwasserstoffkonzentration. Der Sensor ist in Bezug auf die Leitung zurückgesetzt angeordnet. Durch diese Anordnung kann der Sensor den Kohlenwasserstoffgehalt entkoppelt von dem Volumenstrom in der Leitung messen.

Erfindungsgemäß ist der Kohlenwasserstoffsensor in einer Sensorkammer angeordnet, die mit der Leitung gekoppelt ist. Zwischen der Leitung und der Sensorkammer kann ein gasdurchlässiges Element angeordnet sein. So ist ein möglichst einfacher Aufbau eines zurückgesetzt angeordneten Sensors realisiert.

Das gasdurchlässige Element kann so gasdurchlässig sein, dass die Kohlenwasserstoffkonzentration des Gases in der Sensorkammer abhängig von der der Kohlenwasserstoffkonzentration des Gasstroms in der Leitung ist. Dadurch ist der von dem Sensor ermittelte Kohlenwasserstoffgehalt in der Sensorkammer repräsentativ für die Kohlenwasserstoffkonzentration des Gasstroms in der Leitung.

Das gasdurchlässige Element kann eine Barriere für Flammen sein. Dadurch kann sich ein Feuer, das durch eine Fehlfunktion an dem Sensor entsteht, nicht in der Leitung ausbreiten.

Der mindestens eine Sensor weist mindestens ein Heizelement zum Aufheizen eines Gasstroms und mindestens einen ersten und einen zweiten Temperatursensor auf, wobei das mindestens eine Heizelement zwischen dem ersten Temperatursensor und dem zweiten Temperatursensor angeordnet ist. Durch diesen Aufbau kann der Kohlenwasserstoffgehalt relativ genau ermittelt werden. Der Sensor umfasst in einem weiteren Ausführungsbeispiel mindestens ein Halbleiterbauelement, das in dem mindestens einen Sensor integriert ist und eingerichtet ist, temperaturabhängige Signale zu senden.

Eine Brennkraftmaschine umfasst eine Anordnung zur Messung einer Kohlenwasserstoffkonzentration eines Gasstroms in einer Leitung wie oben beschrieben. Dadurch, dass die Kohlenwasserstoffkonzentration des Gasstroms bekannt ist, kann die Brennkraftmaschine relativ präzise gesteuert werden. Die Leitung der Anordnung kann zur pneumatischen Kommunikation zwischen einem Tankentlüftungssystem und mindestens einen Zylinder der Brennkraftmaschine ausgebildet sein. Die Brennkraftmaschine kann einen Speicher zur Speicherung von gasförmigen Kohlenwasserstoffen umfassen, der mit der Leitung gekoppelt ist.

Weitere Merkmale, Vorteile und Weiterbildungen ergeben sich aus den nachfolgenden in Verbindung mit den Figuren 1 bis 3 erläuterten Beispielen. Es zeigen:
- Figur 1: eine schematische Anordnung eines Sensors in einer Sensorkammer,
- Figur 2: eine schematische Darstellung eines Sensors gemäß einer Ausführungsform,
- Figur 3: eine schematische Darstellung einer Brennkraftmaschine.

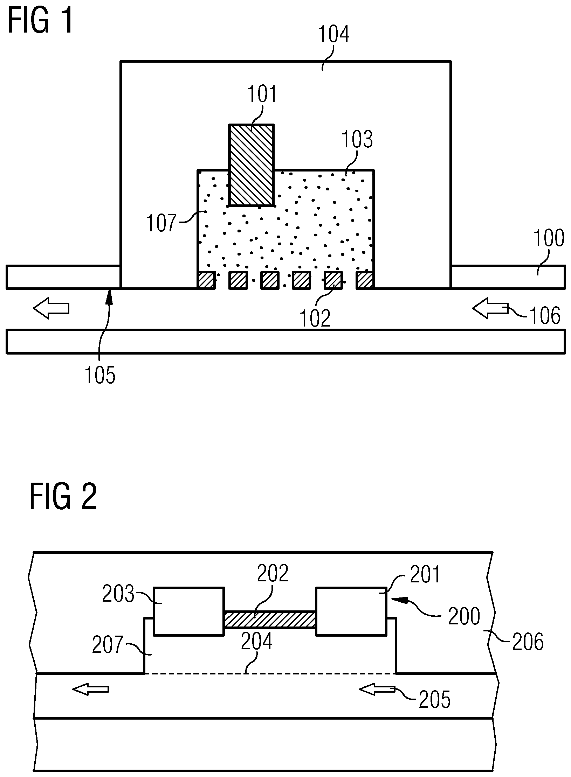

Figur 1 zeigt eine Leitung 100, in der ein Gasstrom 106 strömt. Mit der Leitung 100 ist ein Gehäuse 104 gekoppelt, das eine Sensorkammer 103 umgibt. Das Gehäuse 104 ist mit der Leitung 100 so gekoppelt, dass das Gas, das sich in der Leitung bewegt, zumindest zu einem Teil in die Sensorkammer 103 gelangen kann. In der Sensorkammer befinden sich Kohlenwasserstoffe 107. Ein Sensor 101, der eingerichtet ist eine Kohlenwasserstoffkonzentration zu messen, ist so angeordnet, dass seine sensiblen Bereiche in der Sensorkammer angeordnet sind beziehungsweise mit den Kohlenwasserstoffen 107 in Kontakt kommen können. An der Sensorkammer 103 ist in Richtung der Leitung 100 ein gasdurchlässiges Element 102 angeordnet.

Die Leitung 100, die beispielsweise Teil eines Tankentlüftungssystems einer Brennkraftmaschine ist, kann mit einem Ende mit einem Tank für gasförmige Kohlenwasserstoffe gekoppelt sein. Aus diesem Tank strömt Gas beispielsweise zu einer Ansaugseite eines Verbrennungsmotors. Das Gas strömt mit einer Geschwindigkeit durch die Leitung 100. Dadurch, dass der Sensor 101 im Bezug auf die Leitung 100 zurückgesetzt angeordnet ist, weist das Gas an dem Sensor eine geringere oder möglichst keine Strömungsgeschwindigkeit auf. Der Sensor kann die Kohlenwasserstoffkonzentration entkoppelt von der Strömungsgeschwindigkeit des Gasstroms 106 messen.

Die Sensorkammer 103 wird von dem Gehäuse 104 so umgeben, dass das Kammervolumen so minimal ist, dass eine Änderung der Kohlenwasserstoffkonzentration in der Leitung 100 möglichst schnell eine Änderung der Kohlenwasserstoffkonzentration in der Sensorkammer 103 zur Folge hat. Bei einem kleineren Volumen der Sensorkammer 103 findet der Gasaustausch schneller statt. Die Kohlenwasserstoffkonzentration in der Sensorkammer 103 ist möglichst gleich der Kohlenwasserstoffkonzentration in der Leitung 100.

Zwischen der Sensorkammer 103 und der Leitung 100 ist das gasdurchlässige Element 102 angeordnet. Das gasdurchlässige Element ist in der gezeigten Ausführungsform ein Gitter. Durch das Gitter kann zumindest ein Teil des Gases, das in der Leitung 100 geführt wird, in die Sensorkammer 103 gelangen. Gas, das in der Sensorkammer 103 ist, kann in die Leitung 100 gelangen. Das Gitter 102 ist so ausgebildet, dass es eine Barriere für Flammen darstellt. Durch eine Fehlfunktion beispielsweise einen Kurzschluss an dem Sensor 101 können in der Sensorkammer 103 Kohlenwasserstoffe entzündet werden. Die Flammen dieses Brandes können das Gitter 102 nicht überwinden. Der Brand kann sich so nicht innerhalb der Leitung 100 ausbreiten und erlischt, sobald alle Kohlenwasserstoffe 107 in der Sensorkammer 103 verbrannt sind.

Die Leitung 100 weist in Bezug auf die Umgebung eine Innenseite 105 auf, die in Betrieb in Bezug auf die Schwerkraft oben liegend orientiert ist. Das Gehäuse 104 beziehungsweise die Sensorkammer 103 sind an dieser Innenseite 105 angeordnet. Die Sensorkammer 103 liegt oberhalb der Leitung 100, so dass möglichst keine Flüssigkeit beispielsweise durch die Schwerkraft in die Kammer eindringen kann. Der Sensor 101 ist in der Kammer so angeordnet, dass ein guter Gasaustausch zwischen der Sensorkammer 103 und der Leitung 100 stattfinden kann und die Bewegung des Gases innerhalb der Sensorkammer 103 an dem Sensor 101 möglichst gering ist.

Der Sensor 101 weist in einem vom Erfindungsgegenstand abweichenden Beispiel ein Heizelement zum Aufheizen des Gases und einen Temperatursensor auf. Beispielsweise ist der Sensor auf einem Siliziumchip integriert. Das kohlenwasserstoffhaltige Gas wird aufgeheizt und anhand von Signalen des Temperatursensors kann die Wärmeleitfähigkeit des Gases ermittelt werden. Daraus kann die Konzentration der Kohlenwasserstoffe ermittelt werden. Der Sensor kann eine Auswerteschaltung und/oder einen Digital-Analog-Wandler und/oder weitere Elemente umfassen. In einer weiteren Ausführungsform umfasst der Sensor ein Bauelement, das temperaturabhängig arbeitet, beispielsweise einen Heißleiter (Negative Temperature Coefficient Thermistor) oder eine Diode.

Figur 2 zeigt einen Sensor 200, der in Bezug auf eine Leitung 206 zurückgesetzt angeordnet ist. Der Sensor 200 weist einen Temperatursensor 201 und einen weiteren Temperatursensor 203 auf, die jeweils auf einer Seite eines Heizelements 202 angeordnet sind. Der Sensor 200 ist eingerichtet, die Konzentration von Kohlenwasserstoff in dem Gas 205 zu messen. Der Sensor 200 ist in einer Sensorkammer 207 angeordnet, die von der Leitung durch ein Gitter 204 entkoppelt ist. In der Sensorkammer 207 weist das Gas eine möglichst geringe Strömungsgeschwindigkeit auf.

Der Sensor 200 ist beispielsweise auf einem Siliziumsubstrat integriert und kann weitere Bauelemente umfassen, beispielsweise eine Auswerteschaltung, einen Analog-Digital-Wandler oder eine Schaltung zur Temperaturkompensation. Der Temperatursensor 201 und der Temperatursensor 203 können jeweils mehrere Temperaturfühler zum Messen einer Temperatur aufweisen. Die Temperatursensoren 201 und 203 und das Heizelement 202 sind auf einer Ebene angeordnet.

Der Temperatursensor 201 misst eine erste Temperatur und der Temperatursensor 203 misst eine weitere Temperatur. Die jeweilige Höhe der Temperaturen ergibt sich aus dem Aufheizen des Gases durch das Heizelement 202. Abhängig von der Kohlenwasserstoffkonzentration wird das Gas bei konstanter Heizleistung unterschiedlich erhitzt. Die Temperatur, die von dem Sensor 201 gemessen wird und die weitere Temperatur, die von dem Temperatursensor 203 gemessen wird, können zur Auswertung addiert werden. Dieser Wert der addierten Temperaturen ist abhängig von einer bekannten Heizleistung repräsentativ für die Kohlenwasserstoffkonzentration des Gases in der Sensorkammer 207. Dadurch dass ein möglichst guter Gasaustausch zwischen der Sensorkammer 207 und der Leitung 206 stattfinden kann, ist dieser Wert auch repräsentativ für die Kohlenwasserstoffkonzentration des Gases 205.

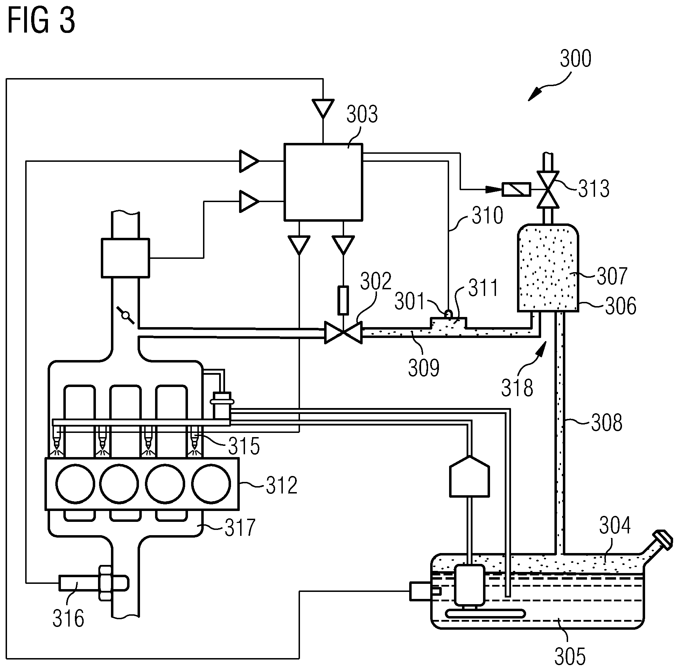

Figur 3 zeigt eine Brennkraftmaschine 300. Die Brennkraftmaschine 300 weist einen Kraftstofftank 304, einen Verbrennungsmotor 312 sowie ein Tankentlüftungssystem 318 auf. In dem Kraftstofftank 304 ist Kraftstoff 305 gelagert, beispielsweise Benzin. Gasförmige Kohlenwasserstoffe 307, die sich aus dem flüssigen Kraftstoff 305 lösen, werden über das Tankentlüftungssystem dem Verbrennungsmotor 312 zugeführt. Das Tankentlüftungssystem 318 weist eine Leitung 308 auf, die mit dem Kraftstofftank 304 und einem Kohlenwasserstofftank 306 gekoppelt ist. Aus dem Kraftstofftank 304 können gasförmige Wasserstoffe in den Kohlenwasserstofftank 306 geleitet werden. Der Kohlenwasserstofftank ist über eine Leitung 309 mit dem Verbrennungsmotor 312 gekoppelt, insbesondere mit dem Ansaugtrakt des Verbrennungsmotors.

Ein Sensor 301 zur Messung einer Kohlenwasserstoffkonzentration ist zurückgesetzt an der Leitung 309 angeordnet. Eine Sensorkammer 311, in der der Sensor 301 angeordnet ist, ist mit der Leitung 309 gekoppelt. Ein Gitter, das insbesondere eine Barriere für Flammen darstellt, kann zwischen der Sensorkammer 311 und der Leitung 309 angeordnet sein. Es können auch weitere Sensoren zur Messung einer Kohlenwasserstoffkonzentration angeordnet sein. Beispielsweise sind an der Leitung 308 Sensoren angeordnet, die eingerichtet sind, einen Kohlenwasserstoffgehalt eines Gases zu messen. Der Sensor 301 ist über eine elektrische Leitung 310 mit einer Motorsteuerung 303 gekoppelt. Die Motorsteuerung 303 kann Signale des Sensors 301 auswerten und die Kohlenwasserstoffkonzentration in der Sensorkammer ermitteln.

Der Gasstrom durch die Leitung 309 kann von einem Ventil 302 gesteuert werden, das mit der Leitung 309 gekoppelt ist. Das Ventil 302 ist über eine elektrische Leitung mit der Motorsteuerung 303 gekoppelt. Die Motorsteuerung 303 kann die Signale der Kohlenwasserstoffsensoren auswerten und Ventile steuern.

Der Kraftstoff 305 kann über eine Kraftstofffördereinheit über Kraftstoffleitungen zum Verbrennungsmotor 312 geführt werden, wo er über mindestens ein Einspritzventil 315 in den Ansaugtrakt des Verbrennungsmotors oder in mindestens einen Zylinder 317 eingespritzt wird und im Verbrennungsmotor zur Verbrennung kommt. Die Abgase des Verbrennungsprozesses werden durch einen Abgasstrang vom Motor weg gefördert. Im Abgasstrang ist eine Lambdasonde 316 angeordnet, die ein Verhältnis von Luft zu Kraftstoff bestimmen kann. Dazu misst die Lambdasonde den Restsauerstoffgehalt im Abgas.

Aus dem Kraftstoff 305 verflüchtigen sich Kohlenwasserstoffe, beispielsweise Methan, Butan oder Propan. Die verschiedenen Kohlenwasserstoffketten weisen unterschiedliche Verdampfungstemperaturen auf, so dass abhängig von der Außentemperatur unterschiedliche Kohlenwasserstoffe aus dem flüssigen Kraftstoff 305 ausgelöst werden. Je höher die Außentemperatur und damit die Temperatur des Kraftstoffs 305 desto mehr Kohlenwasserstoffe gehen in die Gasphase über. Der Tank 304, in dem der Kraftstoff 305 gelagert ist, ist gasdicht ausgeführt, so dass möglichst kein Gas ungewollt aus dem Tank 304 entweichen kann. Der Tankdeckel schließt einen Einfüllstutzen des Kraftstofftanks dazu möglichst gasdicht ab. Das kohlenwasserstoffhaltige Gasgemisch, das sich in dem Tank 304 bildet, wird über die Leitung 308 in den Kohlenwasserstofftank 306 geführt.

Der Kohlenwasserstofftank kann ein Aktivkohlespeicherelement enthalten. Die ausgedampften Kohlenwasserstoffe werden von der Aktivkohle aufgenommen, gespeichert und bei Bedarf wieder abgegeben. Wenn der Kohlenwasserstofftank eine gewisse Menge an Kohlenwasserstoffen aufgenommen hat, kann er über die Leitung 309 entleert werden. Dazu wird in den Kohlenwasserstofftank von außen über ein Ventil 313 Luft eingeblasen, die die Kohlenwasserstoffe aufnimmt. Die kohlenwasserstoffhaltige Luft kann als Ansaugluft für den Verbrennungsmotor 312 verwendet werden und damit zur Verbrennung im Motor beitragen.

Da durch die Kohlenwasserstoffe in der Ansaugluft dem Verbrennungsmotor eine gewisse Energiemenge zugeführt wird, kann über die Einspritzventile 315 entsprechend weniger Kraftstoff eingespritzt werden. Zur Steuerung dieses Verhältnisses wird der Kohlenwasserstoffgehalt der zugeführten Luft über die Kohlenwasserstoffsensoren gemessen.

Dadurch, dass der Kohlenwasserstoffsensor 301 in der Sensorkammer 311 zurückgesetzt zur Leitung 309 angeordnet ist, misst dieser lediglich die Kohlenwasserstoffkonzentration des Gases entkoppelt von dem Massenstrom durch die Leitung 309. Der Massenstrom kann von der Motorsteuerung 303 durch gespeicherte Modelle ermittelt werden, die den Massenstrom durch die Leitung 309 beziehungsweise das Ventil 302 simulieren. Er kann auch direkt mittels eines oder mehrerer Luftmassensensoren ermittelt werden, er kann aber auch teilweise von anderen Messgrößen mittels entsprechenden Modellen abgeleitet werden.

Die Motorsteuerung 303 wertet die Signale des Sensors 301 aus, so dass die Konzentration an Kohlenwasserstoffen des Gasstroms durch die Leitung 309 bekannt ist. Durch die Kennfelder, die in der Motorsteuerung 303 gespeichert sind, ist der Massenstrom bekannt. Damit ist bekannt, wie viel Energie in Form von gasförmigen Kohlenwasserstoffen dem Verbrennungsmotor 312 zugeführt wird. Die Motorsteuerung 303 steuert Stellglieder entsprechend, so dass das das Verhältnis von flüssigem Kraftstoff zu gasförmigen Kohlenwasserstoffen möglichst optimal ist und dadurch der Kraftstoffverbrauch möglich gering ist. Die Abgase sind dadurch ebenfalls möglichst emissionsarm.

Der Aktivkohlefilter kann relativ schnell entleert werden, da die Steuerung relativ schnell arbeitet, insbesondere im Vergleich mit einer Steuerung, die auf Daten der Lambdasonde 316 beruht. Die Menge an Kraftstoff, die über die Einspritzventile 315 in den Verbrennungsmotor eingespritzt wird, wird nicht nur auf Grundlage der Daten der Lambdasonde gesteuert, sondern direkt durch die Daten, die die Motorsteuerung 303 mit Hilfe der Kohlenwasserstoffsensoren bestimmt. Die Menge an Gas, die durch die Leitung 309 strömt, muss nicht begrenzt werden, was insbesondere zu relativ kurzen Regenerierzeiten des Kohlenwasserstofftanks 306 führt. Dies kann bei Fahrzeugen mit Hybridantrieb oder Start-Stopp-Technik, in denen eine geringere Motorlaufzeit ein schnelles Entleeren des Aktivkohlefilters notwendig macht, von Vorteil sein.

## Patentansprüche

1. Anordnung zur Messung einer Kohlenwasserstoffkonzentration eines Gasstroms in einer Leitung (100), umfassend:
- mindestens einen Sensor (101; 200) zur Messung einer Kohlenwasserstoffkonzentration, wobei der Sensor (101; 200) mindestens ein Heizelement (202) zum Aufheizen eines Gasstroms und mindestens einen Temperatursensor (203) und mindestens einen weiteren Temperatursensor (201) aufweist, und bei der das mindestens eine Heizelement (202) zwischen dem Temperatursensor (201) und dem weiteren Temperatursensor (203) angeordnet ist, wobei der mindestens eine Sensor (101; 200) eine Auswerteschaltung umfasst, die dazu eingerichtet ist, die Summe der Temperaturen des mindestens einen Temperatursensors (203) und des mindestens einen weiteren Temperatursensors (201) zu ermitteln, **dadurch gekennzeichnet, dass** der mindestens eine Sensor in Bezug auf die Leitung (100) zurückgesetzt angeordnet ist, wobei der Sensor (101) in einer Sensorkammer (103, 207) angeordnet ist, und wobei das Gas in der Sensorkammer (103, 207) möglichst keine Strömungsgeschwindigkeit aufweist, und dass die Auswerteschaltung dazu eingerichtet ist, die Kohlenwasserstoffkonzentration in Abhängigkeit von einer Heizleistung des mindestens einen Heizelements (202) und der ermittelten Summe zu ermitteln.

2. Anordnung nach Anspruch 1, bei der der Kohlenwasserstoffsensor (101) in einer Sensorkammer (103) angeordnet ist, die mit der Leitung (100) gekoppelt ist.

3. Anordnung nach Anspruch 2, die ein gasdurchlässiges Element (102) umfasst, das zwischen der Leitung (101) und Sensorkammer (103) angeordnet ist.

4. Anordnung nach Anspruch 3, bei der das gasdurchlässige Element (102) so gasdurchlässig ist, dass die Kohlenwasserstoffkonzentration des Gases in der Sensorkammer (103) abhängig von der der Kohlenwasserstoffkonzentration des Gasstroms in der Leitung (100) ist.

5. Anordnung nach Anspruch 3 oder 4, bei der das gasdurchlässige Element (102) eine Barriere für Flammen ist.

6. Anordnung nach einem der Ansprüche 1 bis 5, bei der der mindestens eine Sensor (101) mindestens ein Halbleiterbauelement aufweist, das in dem mindestens einen Sensor (101) integriert ist und eingerichtet ist temperaturabhängige Signale zu senden.

7. Brennkraftmaschine, umfassend eine Anordnung nach einem der Ansprüche 1 bis 6.

8. Brennkraftmaschine nach Anspruch 7, bei der die Leitung (309) ausgebildet ist zur pneumatischen Kommunikation zwischen einem Tankentlüftungssystem (318) und mindestens einem Zylinder (317) der Brennkraftmaschine.

9. Brennkraftmaschine nach Anspruch 8, die einen Speicher (306) zur Speicherung von gasförmigen Kohlenwasserstoffen umfasst, der mit der Leitung (309) gekoppelt ist.

## Claims

1. Arrangement for measuring a hydrocarbon concentration of a gas flow in a line (100), comprising:
- at least one sensor (101; 200) for measuring a hydrocarbon concentration, wherein the sensor (101; 200) has at least one heating element (202) for heating a gas flow and at least one temperature sensor (203) and at least one further temperature sensor (201), and in which arrangement the at least one heating element (202) is arranged between the temperature sensor (201) and the further temperature sensor (203), wherein the at least one sensor (101; 200) comprises an evaluating circuit, which is set up for determining the sum of the temperatures of the at least one temperature sensor (203) and the at least one further temperature sensor (201), **characterized in that** the at least one sensor is set back with respect to the line (100), wherein the sensor (101) is arranged in a sensor chamber (103, 207), and wherein the gas in the sensor chamber (103, 207) has as far as possible no flow velocity, and **in that** the evaluating circuit is set up for determining the hydrocarbon concentration in dependence on the heating capacity of the at least one heating element (202) and the sum determined.

2. Arrangement according to Claim 1, wherein the hydrocarbon sensor (101) is arranged in a sensor chamber (103) which is coupled to the line (100).

3. Arrangement according to Claim 2 which comprises a gas-permeable element (102) which is arranged between the line (103) and the sensor chamber (103).

4. Arrangement according to Claim 3, wherein the gas-permeable element (102) is so gas-permeable that the hydrocarbon concentration of the gas in the sensor chamber (103) depends on the hydrocarbon concentration of the gas flow in the line (100).

5. Arrangement according to Claim 3 or 4, wherein the gas-permeable element (102) is a barrier for flames.

6. Arrangement according to one of Claims 1 to 5, wherein the at least one sensor (101) has at least one semiconductor component which is integrated in the at least one sensor (101) and is set up for sending temperature-dependent signals.

7. Internal combustion engine apparatus comprising an arrangement according to one of Claims 1 to 6.

8. Internal combustion engine apparatus according to Claim 7, wherein the line (309) is designed for pneumatic communication between a tank venting system (318) and at least one cylinder (317) of the internal combustion engine apparatus.

9. Internal combustion engine apparatus according to Claim 8 which has a storage reservoir (306) for storing gaseous hydrocarbons, said storage reservoir (306) being coupled to the line (309).

## Revendications

1. Dispositif de mesure de la concentration en hydrocarbures d'un flux de gaz dans un conduit (100), le procédé comprenant :
- au moins un capteur (101 ; 200) destiné à mesurer la concentration en hydrocarbures, le capteur (101 ; 200) comportant au moins un élément chauffant (202) destiné à chauffer un flux de gaz et au moins un capteur de température (203) et au moins un capteur de température supplémentaire (201), et l'au moins un élément chauffant (202) étant disposé entre le capteur de température (201) et le capteur de température supplémentaire (203), l'au moins un capteur (101 ; 200) comprenant un circuit d'évaluation qui est conçu pour déterminer la somme des températures de l'au moins un capteur de température (203) et de l'au moins un capteur de température supplémentaire (201), **caractérisé en ce que** l'au moins un capteur est situé en retrait par rapport au conduit (100), le capteur (101) étant disposé dans une chambre de capteur (103, 207), et le gaz dans la chambre de capteur (103, 207) ne présentant dans la mesure du possible aucune vitesse d'écoulement, et **en ce que** le circuit d'évaluation est adapté pour déterminer la concentration en hydrocarbures en fonction de la puissance de chauffage de l'au moins un élément chauffant (202) et de la somme déterminée.

2. Dispositif selon la revendication 1, le capteur d'hydrocarbures (101) étant disposé dans une chambre de capteur (103) accouplée au conduit (100).

3. Dispositif selon la revendication 2, comprenant un élément perméable aux gaz (102) qui est disposé entre le conduit (101) et la chambre de capteur (103).

4. Dispositif selon la revendication 3, l'élément perméable aux gaz (102) étant perméable aux gaz de telle sorte que la concentration en hydrocarbures du gaz dans la chambre de détection (103) dépende de la concentration en hydrocarbures du flux de gaz dans le conduit (100).

5. Dispositif selon la revendication 3 ou 4, l'élément perméable aux gaz (102) étant une barrière contre les flammes.

6. Dispositif selon l'une des revendications 1 à 5, l'au moins un capteur (101) comportant au moins un dispositif à semi-conducteur qui est intégré dans l'au moins un capteur (101) et qui est adapté pour envoyer des signaux dépendant de la température.

7. Moteur à combustion interne, comprenant un dispositif selon l'une des revendications 1 à 6.

8. Moteur à combustion interne selon la revendication 7, le conduit (309) étant conçu pour la communication pneumatique entre un système de ventilation de réservoir (318) et au moins un cylindre (317) du moteur à combustion interne.

9. Moteur à combustion interne selon la revendication 8, comprenant un accumulateur (306) destiné à stocker des hydrocarbures gazeux et accouplé au conduit (309).
